# EUROPEAN PATENT APPLICATION

(11) **EP 3 261 330 A1**
(43) Date of publication of application: **27.12.2017**
(21) Application number: 17162435.6
(22) Date of filing: 22.03.2017
(51) Int. Cl.: H04N 5/232

(54) **METHOD AND APPARATUS FOR SETTING CAMERA PARAMETER**

(30) Priority: 21.06.2016 CN 201610454530
(71) Applicant: Beijing Xiaomi Mobile Software Co., Ltd., Beijing 100085 (CN)
(72) Inventor: LIU, Huayijun, BEIJING (CN); CHEN, Tao, BEIJING (CN); WU, Ke, BEIJING (CN)
(74) Representative: Cougard, Jean-Marie

(57) **Abstract**

The present invention relates to a method and an apparatus for setting a camera parameter, pertaining to the field of computer technology. The method includes: acquiring (101) an environment condition of an environment and a device parameter of an image capturing device; sending (102) a sample acquiring request to a server, the sample acquiring request including the environment condition and the device parameter; determining (103) a target camera parameter according to at least one sample image included in sample data received from the server in response to the sample acquiring request; and setting (104) a camera parameter of the image capturing device according to the target camera parameter. Through the embodiments of the present invention, it can improve the efficiency and accuracy of setting a camera parameter.

## Description

### TECHNICAL FIELD

The present invention generally relates to the field of computer technology, and more particularly, to a method and an apparatus for setting a camera parameter.

### BACKGROUND

With the development of computer technology and the improvement of life quality, users can capture images including pictures and videos with image capturing devices such as smart cameras, to record valuable moments in lives, natural scenery and other interesting scenes. During the process of capturing images, camera parameters can be set.

Presently, when a user captures an image with an image capturing device, the user can manually set camera parameters based on personal experience and according to the environmental conditions. Although an image capturing device with an automatic mode can select camera parameters automatically, the automatic selection is only made according to a fixed selection rule and a best camera parameter cannot be selected according to the camera time, place and environment.

### SUMMARY

In order to overcome the defects in the related art, the present invention provides a method and an apparatus for setting a camera parameter.

According to a first aspect of embodiments, the invention relates to a method for setting a camera parameter, including:
acquiring an environment condition of an environment and a device parameter of an image capturing device;
sending a sample acquiring request to a server, the sample acquiring request including the environment condition and the device parameter;
determining a target camera parameter according to at least one sample image included in sample data received from the server in response to the sample acquiring request; and
setting the camera parameter of the image capturing device according to the target camera parameter.

In a particular embodiment, the environment refers to a geographical environment (geographical area).

In a particular embodiment, the environment condition can define a geographical position.

In a particular embodiment, the environment condition corresponds to a meteorological condition.

The environment condition of the environment can include at least one of the following: temperature, humidity, wind direction, wind speed, altitude, barometric pressure, geographical location, weather condition.

In a particular embodiment, the device parameter of the image capturing device includes a camera parameter range the image capturing device can support or a device identification of the image capturing device.

In a particular embodiment, determining a target camera parameter according to at least one sample image included in the sample data, includes:
displaying the at least one sample image;
determining a sample image image amongst the at least one sample image as a target sample image according to a received selection instruction;
acquiring a camera parameter of the target sample image; and
determining a camera parameter of the target sample image as the target camera parameter.

In a particular embodiment, the sample data further includes camera guide information of each of the at least one sample image, the camera guide information being for guiding in capturing an image based on the camera parameter of the sample image.

In a particular embodiment, after the step of determining a sample image as a target sample image, the method further includes:
displaying the camera guide information of the target sample image.

In a particular embodiment, after the step of setting a camera parameter of the image capturing device according to the target camera parameter, the method further includes:
acquiring an image captured by the image capturing device and an environment condition under which the image is captured, the image including a camera parameter used for capturing the image; and
sending the image and the environment condition to the server, for the server to store the image as a sample image corresponding to the environment condition and the camera parameter used for capturing the image.

In a particular embodiment, after the step of acquiring an image captured by the image capturing device and an environment condition under which the image is captured, the method further includes:
receiving inputted camera guide information of the image; and
sending the camera guide information of the image to the server.

According to a second aspect of embodiments, the invention relates to an apparatus for setting a camera parameter, including:
a first acquiring module configured to acquire an environment condition of an environment and a device parameter of an image capturing device;
a first sending module configured to send a sample acquiring request to a server, the sample acquiring request including the environment condition and the device parameter;
a determining module configured to determine a target camera parameter according to at least one sample image included in sample data received from the server in response to the sample acquiring request; and
a setting module configured to set the camera parameter of the image capturing device according to the target camera parameter.

In a particular embodiment, the device parameter of the image capturing device includes a camera parameter range the image capturing device can support or a device identification of the image capturing device.

In a particular embodiment, the determining module includes:
a first displaying unit configured to display the at least one sample image;
a first determining unit configured to determine a sample image amongst the at least one sample image as a target sample image according to a received selection instruction;
an acquiring unit configured to acquire a camera parameter of the target sample image; and
a second determining unit configured to determine a camera parameter of the target sample image as the target camera parameter.

In a particular embodiment, the sample data further includes camera guide information of each of the at least one sample image, the camera guide information being for guiding in capturing an image based on the camera parameter of the sample image.

In a particular embodiment, the determining module further includes:
a second displaying unit configured to display the camera guide information of the target sample image.

In a particular embodiment, the apparatus further includes:
a second acquiring module configured to acquire an image captured by the image capturing device and an environment condition under which the image is captured, the image including a camera parameter used for capturing the image; and
a second sending module configured to send the image and the environment condition to the server, for the server to store the image as a sample image corresponding to the environment condition and the camera parameter used for capturing the image.

In a particular embodiment, the apparatus further includes:
a receiving module configured to receive inputted camera guide information of the image; and
a third sending module configured to send the camera guide information of the image to the server.

According to a third aspect of embodiments, the invention relates to an apparatus for setting a camera parameter, including:
a processor; and
a memory for storing instructions executable by the processor;
wherein the processor is configured to perform:
   acquiring an environment condition of a environment and a device parameter of an image capturing device;
   sending a sample acquiring request to a server, the sample acquiring request including the environment condition and the device parameter;
   determining a target camera parameter according to at least one sample image included in sample data received from the server in response to the sample acquiring request; and
   setting the camera parameter of the image capturing device according to the target camera parameter.

The technical scheme according to embodiments of the present invention may have the following beneficial effects: in the embodiments of the present invention, it is possible to acquire an environment condition of an environment and a device parameter of the image capturing device; send a sample acquiring request to a server; determine a target camera parameter according to at least one sample image included in sample data received from the server in response to the sample acquiring request and set the target camera parameter as the camera parameter. In this way, since the user does not need to manually set the camera parameter based on experience, it can improve the efficiency in setting a camera parameter. Moreover, since the sample data is sent by the server according to the environment condition of the environment and the device parameter of the image capturing device, the target camera parameter determined by the sample data is consistent with the environment of the image capturing device and the image capturing device can support the camera parameter. It can improve the efficiency of the image capturing device determining the camera parameter and improve the photographic effect of an image captured with the image capturing device.

It is to be understood that both the foregoing general description and the following detailed description are exemplary and explanatory only and are not restrictive of the present invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for setting a camera parameter according to an exemplary embodiment.
Fig. 2 is a flow chart illustrating another method for setting a camera parameter according to an exemplary embodiment.
Fig. 3 is a flow chart illustrating yet another method for setting a camera parameter according to an exemplary embodiment.
Fig. 4 is a block diagram illustrating an apparatus for setting a camera parameter according to an exemplary embodiment.
Fig. 5 is a block diagram illustrating another apparatus for setting a camera parameter according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Before detailed description of the embodiments of the present invention, an application scene of the embodiments of the present invention will firstly be described. A user can capture an image (including a picture, a video or the like) with an image capturing device such as a smart camera. In order to improve the photographic effect, the user can set a camera parameter of the image capturing device. Currently, the user can only manually set the camera parameter according to personal usage experience of the image capturing device and adjust the camera parameter according to the photographic effect until a satisfactory photographic effect is achieved, resulting in a rather low efficiency. Therefore, the embodiments of the present invention provide a method for setting a camera parameter.

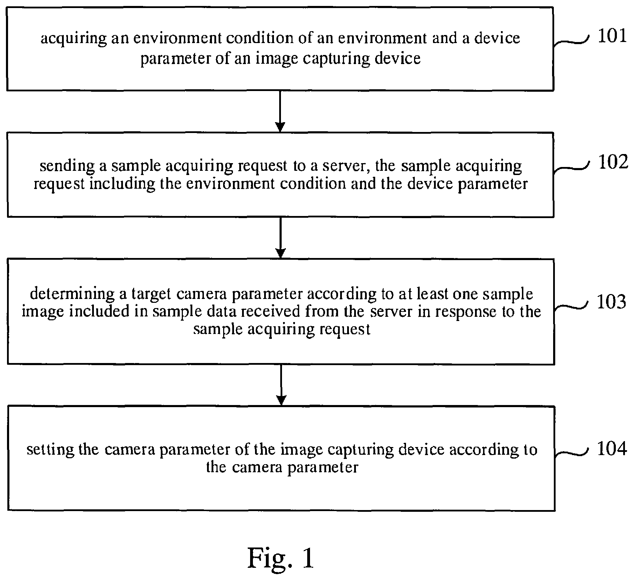

Fig. 1 is a flow chart illustrating a method for setting a camera parameter according to an exemplary embodiment. As shown in Fig. 1, the method for setting a camera parameter can be implemented by a terminal and includes the following steps.

At step 101, an environment condition of an environment and a device parameter of an image capturing device are acquired.

In the following, the environment is designated as a current environment. The current environment may correspond to an environment at a particular moment.

For example, the current environment can correspond to an environment in which the image capturing device is located when the method is performed.

At step 102, a sample acquiring request is sent to a server, the sample acquiring request including the environment condition and the device parameter.

At step 103, when sample data sent by the server according to the environment condition and the device parameter is received, a target camera parameter is determined according to at least one sample image included in the sample data.

At step 104, a camera parameter of the image capturing device is set according to the target camera parameter.

In the following, the camera parameter is designated as a current camera parameter. The current camera parameter may correspond to a camera parameter of the image capturing device which is set at a particular moment.

For example, the current camera parameter can correspond to a camera parameter which is set on the image capturing device when the method is performed.

In the embodiments of the present invention, it is possible to acquire an environment condition of a current environment and a device parameter of the image capturing device; send a sample acquiring request to a server; upon receipt of sample data sent by the server, determine a target camera parameter according to at least one sample image included in the sample data and set the target camera parameter as the current camera parameter. In this way, since the user does not need to manually set a camera parameter based on experience, it can improve the efficiency in setting a camera parameter. Moreover, since the sample data is sent by the server according to the environment condition of the current environment and the device parameter of the image capturing device, the target camera parameter determined according to the sample data is consistent with the current environment in which the image capturing device is and the image capturing device can support the camera parameter. It can improve the efficiency of the image capturing device determining the current camera parameter and improve the photographic effect of an image captured with the image capturing device.

In a particular embodiment, the device parameter of the image capturing device includes a camera parameter range the image capturing device can support or a device identification of the image capturing device.

In a particular embodiment, determining a target camera parameter according to at least one sample image included in the sample data, includes:
displaying the at least one sample image;
determining a sample image amongst the at least one sample image as a target sample image according to a received selection instruction;
acquiring a camera parameter of the target sample image; and
determining the camera parameter of the target sample image as the target camera parameter.

In a particular embodiment, the sample data further includes camera guide information of each of the at least one sample image, the camera guide information being for guiding in capturing an image based on the camera parameter of the sample image.

In a particular embodiment, after the step of determining a sample image as a target sample image, the method further includes:
displaying the camera guide information of the target sample image.

In a particular embodiment, after the step of setting a current camera parameter of the image capturing device according to the target camera parameter, the method further includes:
acquiring an image captured by the image capturing device and an environment condition under which the image is captured, the captured image including a camera parameter used for capturing the image; and
sending the image and the environment condition to the server, for the server to store the image as a sample image corresponding to the environment condition and the camera parameter used for capturing the image.

In a particular embodiment, after the step of acquiring an image captured by the image capturing device and an environment condition under which the image is captured, the method further includes:
receiving inputted camera guide information of the image; and
sending the camera guide information of the image to the server.

The above optional technical solutions can be combined in any manner to for other optional embodiments of the present invention, which will not be described one by one in the embodiments of the present invention.

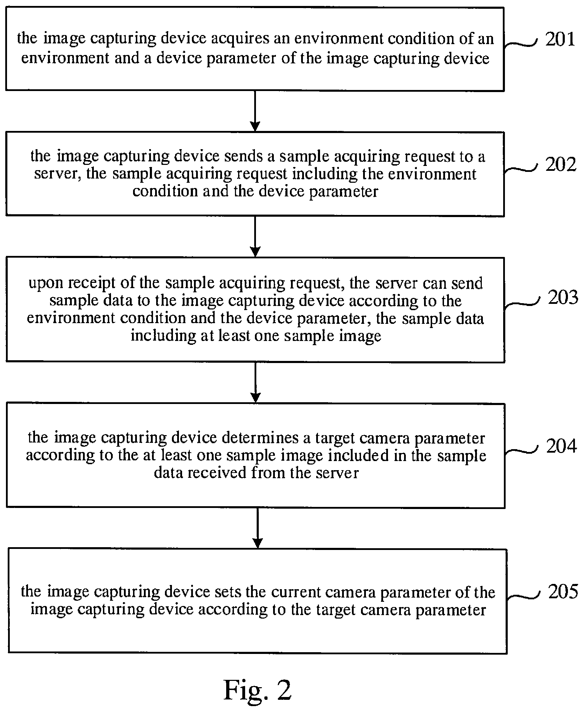

Fig. 2 is a flow chart illustrating another method for setting a camera parameter according to an exemplary embodiment. As shown in Fig. 2, the method for setting a camera parameter is implemented by an image capturing device and includes the following steps.

At step 201, the image capturing device acquires an environment condition of a current environment and a device parameter of the image capturing device.

Generally, a different image capturing device may have a different device parameter, for example, a different parameter range the image capturing device can support. In addition, during the process of capturing an image, the image capturing device may be set with a different camera parameter according to the environment condition of the current environment. Therefore, in order to improve the efficiency and accuracy of setting the camera parameter, the image capturing device can acquire the environment condition of the current environment and the device parameter of the image capturing device.

In the embodiment, the image capturing device may be a device which is capable of capturing an image and can be connected to a network including for example a smart mobile phone and a smart camera.

It should be noted that, the image capturing device can capture an image, the image including a picture or a video. This is not specifically limited in the embodiment of the present invention.

In the embodiment, the environment condition of the current environment includes at least one of the following: temperature, humidity, wind direction, wind speed, altitude, barometric pressure, geographical location, weather condition. However, in practical application, the environment condition can also include other condition of the current environment, which is not specifically limited in the embodiment of the present invention.

It should be noted that, when the environment condition includes a current geographical location, the image capturing device can acquire the current geographical location through satellite positioning technology such as a Global Positioning System (GPS).

Further, the device parameter of the image capturing device includes a camera parameter range the image capturing device can support or the device identification of the image capturing device.

In the embodiment, since the image capturing device can include more than one parameter, in case where the device parameter of the image capturing device includes a camera parameter range the image capturing device can support, the image capturing device can be very slow in sending a sample acquiring request. On the other hand, for the same image capturing device, the camera parameter range the image capturing device can support is generally fixed. Therefore, in order to improve the efficiency of the image capturing device sending the sample acquiring request, and in turn, to improve the efficiency in setting the camera parameter, the device parameter of the image capturing device can be the device identification of the image capturing device.

It should be noted that, the camera parameter range the image capturing device can support refers to a value range of the camera parameter which the image capturing device can be set on.

It should also be noted that the camera parameter of the image capturing device can be a shutter speed, an aperture value, an International Standards Organization (ISO) light sensitivity, a color temperature, an exposure compensation and other parameters. However, in practical application, the camera parameter of the image capturing device can also include other camera parameter such as a focal length, a file format the image capturing device can support, a resolution, or the like. This is not specifically limited in the embodiment of the present invention.

It should be further noted that the device identification is for identifying the image capturing device. The device identification can be a device model, a factory serial number of the image capturing device or the like. This is not specifically limited in the embodiment of the present invention.

Further, the image capturing device can acquire the environment condition of the current environment upon receipt of a camera instruction.

It should be noted that the camera instruction can be triggered by a user performing a preset action such as a click, a touch or the like. However, in practical application, the preset action can be other action, which is not specifically limited in the embodiment of the present invention.

Further, in the embodiment of the present invention, as an example, the operation of the image capturing device acquiring the environment condition of the current environment is triggered by the event of the image capturing device receiving a camera instruction. In practical application, the image capturing device can also perform the operation of acquiring the environment condition of the current environment when other event occurs. For example, in a possible implementation, the image capturing device can perform the operation of acquiring the environment condition of the current environment upon receipt of a camera-parameter acquiring instruction. This is not specifically limited in the embodiment of the present invention.

It should be noted that the camera-parameter acquiring instruction can be triggered by a preset action performed by a user when the user comes across an interesting scene.

For example, the environment condition of the current environment acquired by the image capturing device can be: Xi'an Bell Tower in Shanxi, sunny, 35°C. The camera parameter range which the image capturing device supports can be acquired as: a range of shutter speeds is 1 second, 1/2 second, 1/4 second, 1/8 second, 1/15 second, 1/30 second, 1/60 second, 1/125 second, 1/250 second, 1/500 second, 1/1000 second and 1/2000 second, a range of aperture values is f1, f2, f4, f8, f16, f32 and f64, and a range of ISO light sensitivity is 100, 200, 400, 800, 1600 and 3200.

At step 202, the image capturing device sends a sample acquiring request to a server, the sample acquiring request including the environment condition and the device parameter.

When the environment is the same, the image captured by the image capturing device can be the same but with different camera parameters. Therefore, the image capturing device can send a sample acquiring request to the server, to acquire a sample image consistent with the environment condition of the current environment and the device parameter of the image capturing device. Then the camera parameter can be set based on the acquired sample image.

It should be noted that, before sending the sample acquiring request to the server, the image capturing device can establish connection with the server through Bluetooth, Wireless Fidelity (WIFI) or the like, and then send to the server the sample acquiring request through the established connection. However, in practical application, the image capturing device can also establish connection with the server by other manners, which is not specifically limited in the embodiment of the present invention.

Further, as described above, the device parameter of the image capturing device carried in the sample acquiring request can include the camera parameter range which the image capturing device supports or the device identification of the image capturing device. Therefore, if the device parameter of the image capturing device is the device identification of the image capturing device, upon receipt of the sample acquiring request, the server can determine the camera parameter range which the image capturing device corresponding to the device identification supports according to the device identification.

It should be noted that, before receiving the sample acquiring request, the server can store device identifications of various image capturing devices and camera parameter ranges which each of the image capturing devices respectively supports. Subsequently, upon receipt of a sample acquiring request, the server can determine a camera parameter range which an image capturing device corresponding to the device identification supports according to the device identification carried in the sample acquiring request.

Further, the image captured by the image capturing device can be a picture or a video, and the camera parameter can be different for capturing a video and a picture when the image capturing device captures an image. If the image capturing device captures a video with a camera parameter for capturing a picture, the photographic effect will be undesired. Therefore, in order to improve the accuracy in setting a camera parameter and the photographic effect, the sample acquiring request can carry a type of the sample image which can include a picture or a video, for indicating the server which type of sample image it will have to send.

At step 203, upon receipt of the sample acquiring request, the server can send sample data to the image capturing device according to the environment condition and the device parameter, the sample data including at least one sample image.

The server stores various sample images and camera parameters and environment conditions respectively for capturing each of the sample image. Therefore, upon receipt of the sample requiring request, the server sends sample data to the image capturing device according to the environment condition and the device parameter carried in the sample acquiring request, the sample data including at least one sample image.

In order to ensure that the image capturing device can set a camera parameter according to the sample data and further improve the accuracy and effectiveness of setting a camera parameter, for each of the at least one sample image, the environment condition for capturing the sample image can be the same as the environment condition carried in the sample acquiring request, a number of camera parameters for capturing the sample image can be the same as the number of camera parameters carried in the sample acquiring request, and a camera parameter for capturing the sample image falls within the camera parameter range which the image capturing device supports.

It should be noted that the server can receive images from various devices as sample sources and environment condition for capturing the images. Moreover, an image sent by the sample-source devices generally carries a camera parameter for capturing the image. Therefore, the server can store the image as a sample image as corresponding to the received camera paragraph and the environment condition for capturing the image.

It should be also noted that, a sample-source device can be a device which establishes connection with the server and stores at least one sample image, a camera paragraph and an environment condition for capturing the sample image. The sample-source device can be a computer, a smart mobile phone, a smart camera or the like. This is not specifically limited in the embodiment of the present invention.

Further, in order to improve the efficiency of the server sending sample data to the image capturing device according to the environment condition and the camera parameter range, from corresponding relationships among the stored sample identifications, camera parameters and environment conditions, the server can acquire a sample image with a sample identification which corresponds to an environment condition identical to the environment condition carried in the sample acquiring request, a number of camera parameters identical to the number of camera parameters carried in the sample acquiring request, and a camera parameter falling within the camera parameter range carried in the sample acquiring request.

In the embodiment, the sample identification uniquely identifies one sample image in the server. The sample identification can be determined by the server before the server stores the sample identification in a corresponding relationship among the sample identification, the corresponding camera parameter and the corresponding environment condition.

For example, the server receives a sample acquiring request 1 which carries the following: An environment condition 1, Xi'an Bell Tower in Shanxi, sunny, 35°C; a camera parameter range 1 which the image capturing device carried in the sample acquiring request 1 supports in which a range of shutter speeds is 1 second, 1/2 second, 1/4 second, 1/8 second, 1/15 second, 1/30 second, 1/60 second, 1/125 second, 1/250 second, 1/500 second, 1/1000 second and 1/2000 second, a range of aperture values is f1, f2, f4, f8, f16, f32 and f64, and a range of ISO light sensitivity is 100, 200, 400, 800, 1600 and 3200. In this case, from the corresponding relationships among sample identifications, the camera parameters and the environment conditions as shown in Table One, the server can acquire three sample images, i.e. a sample image 1, a sample image 3 and a sample image 4, and determine the three sample images as sample data 1, based on the environment condition 1 and the camera parameter range 1.

**Table One**

| Sample Identifications | Camera Parameters | Environment Conditions |
|---|---|---|
| Sample Image 1 | shutter speed is 1sec, aperture value is f1, and ISO light sensitivity is 100 | Xi'an Bell Tower in Shanxi, sunny, 35°C |
| Sample Image 2 | shutter speed is 1/8 sec, aperture value is f16, and ISO light sensitivity is 200 | Beijing Tiananmen Square, sunny, 30°C |
| Sample Image 3 | shutter speed is 1/15 sec, aperture value is f16, and ISO light sensitivity is 200 | Xi'an Bell Tower in Shanxi, sunny, 35°C |
| Sample Image 4 | shutter speed is 1/4 sec, aperture value is f16, and ISO light sensitivity is 800 | Xi'an Bell Tower in Shanxi, sunny, 35°C |
| Sample Image 5 | shutter speed is 1/4 sec, aperture value is f16, and ISO light sensitivity is 3200 | Xi'an Bell Tower in Shanxi, rainy, 24°C |
| Sample Image 6 | shutter speed is 1/4000 sec, aperture value is f16, and ISO light sensitivity is 3200 | Xi'an Bell Tower in Shanxi, sunny, 35°C |
| ...... | ...... | ...... |

It should be noted that, in the embodiment of the present invention, the above Table One is only an example of the corresponding relationships among the sample identifications, the camera parameters and the environment conditions, which do not constitute a limitation to the embodiment of the present invention.

It should also be noted that, before the server sends sample data to the image capturing device according to the environment condition and the camera parameter range carried in the sample acquiring request, the server can store various sample images, camera parameters and environment conditions respectively for capturing each of the sample images into the corresponding relationships among the sample identifications, the camera parameters and the environment conditions.

In order for the convenience of the user to capture an image based on a sample image, and in order to improve the effectiveness of capturing an image, the sample data can also include camera guide information for each of the at least one sample image. The camera guide information is for guiding the user in capturing an image based on the camera parameter of the sample image.

In the embodiment, for each of the at least one sample image, the camera guide information of the sample image can be a description of the camera parameter for capturing the sample image. However, in practical application, the camera guide information can also be other information about the sample image, for example, the composition of the sample image, and so on. This is not specifically limited in the embodiment of the present invention.

It should be noted that, for each of the at least one sample image, the camera guide information of the sample image can be determined by the sample-source device which sends the sample image according to received information input by the user about the sample image. Upon receipt of the information input by the user, the sample-source device determines the received information as the camera guide information of the sample image, and sends the camera guide information of the sample image to the server. Upon receipt of the camera guide information of the sample image, the server stores the camera guide information of the sample image.

Further, since the camera parameter for capturing a picture is generally different from the camera parameter for capturing a video, in order to improve the accuracy of setting a camera parameter, when the sample acquiring request carries a type of sample image, the server can only send to the image capturing device sample data which includes sample images of only the same type.

At step 204, upon receipt of the sample data sent by the server according to the environment condition and the device parameter, the image capturing device determines a target camera parameter according to the at least one sample image included in the sample data.

Since the sample data is sent by the server according to the environment condition and the device parameter, for each of the at least one sample image included in the sample data, the environment condition for capturing the sample image is the same as the current environment of the image capturing device, and the camera parameter for capturing the sample image is in consistence with the camera parameter of the image capturing device. Therefore, the target camera parameter can be determined according to the at least one sample image included in the sample data.

In the embodiment, the operation of the image capturing device determining a target camera parameter according to the at least one sample image included in the sample data can be: displaying the at least one sample image; upon receipt of a selection instruction, determining a sample image selected by the selection instruction as the target sample image; acquiring a camera parameter of the target sample image; and determining the camera parameter of the target sample image as the target camera parameter.

It should be noted that the selection instruction can be triggered by a preset action performed by the user.

It should be further noted that, since a sample image generally carries a camera parameter for capturing the sample image, the image capturing device can acquire the camera parameter of the target sample image from the target sample image. However, in practical application, the image capturing device can acquire the camera parameter of the target sample image by other manners. For example, in another possible implementation, the server can cause the sample data to carry a camera parameter of each of the at least one sample image, and then, the image capturing device can acquire the camera parameter of the target sample image from the sample data.

For example, when the image capturing device receives sample data 1 which carries three sample images: a sample image 1, a sample image 3 and a sample image 4. The image capturing device receives a selection instruction based on the three sample images and the selection instruction selects the sample image 1. In this case, the sample image 1 is determined as the target sample image, and the camera parameter carried in the sample image 1 is acquired from the sample image 1, that is, the shutter speed is 1sec, the aperture value is f1, and the ISO light sensitivity is 100. Then, the camera parameter, i.e. the shutter speed of 1sec, the aperture value of f1 and the ISO light sensitivity of 100, is determined as the target camera parameter.

Further, in order to improve the photographic effect in capturing an image and improve the efficiency in capturing an image according to a target sample image and a target camera parameter, in case where sample data also includes camera guide information of each of the at least one sample image, the image capturing device can also display the camera guide information of the target sample image.

In the embodiment, the image capturing device can display the camera guide information of the target sample image through a box, a popping-out window or other manners. However, in practical application, the image capturing device can also display the camera guide information of the target sample image through other manners, which is not specifically limited by the embodiments of the present invention.

At step 205, the image capturing device sets a current camera parameter of the image capturing device according to the target camera parameter.

Since the environment condition of the target sample image is the same as the environment condition of the image capturing device, and the target camera parameter is also within the camera parameter range which the image capturing device supports, the image capturing device can accurately set the current camera parameter of the image capturing device according to the target camera parameter, improving the effect of capturing an image.

Further, as the server stores an increasing number of sample images, the sample data sent by the server will also include an increasing number of sample images, to improve the accuracy of setting a camera parameter. In this case, in order to increase the number of the sample images stored in the server, the image capturing device can acquire the image captured by the image capturing device and the environment condition for capturing the image, the image including a camera parameter for capturing the image. Then, the image capturing device can send the image and the environment condition for capturing the image to the server, for the server to store the image as a sample image corresponding to the environment condition and the camera parameter for capturing the image.

In the embodiment, the image capturing device can acquire the image captured by the image capturing device and the environment condition for capturing the image through one of the following two possible implementations.

In a first possible implementation, at a preset time period, the image capturing device sends to the server images captured during the preset time period before and closest to the current time and environment conditions respectively for capturing the images.

In the first possible implementation, the image capturing device can reduce times of communication with the server, and save power for the image capturing device.

It should be noted that, the preset time period can be determined before the image capturing device acquires the image captured by the image capturing device and the environment condition for capturing the image. The preset time period can be 3 hours or 5 hours. However, in practical application, the preset time period can be other values, which is not specifically limited by the embodiments of the present invention.

In a second possible implementation, when the image capturing device captures an image, the image capturing device acquires the image captured by the image capturing device and the environment condition for capturing the image, and sends the image and the environment condition for capturing the image to the server.

In the second possible implementation, it can ensure that the image capturing device can timely send the captured image and the environment condition for capturing the image to the server when captures the image. It can improve the efficiency in sending the image and the environment condition for capturing the image to the server.

Further, in order to explain the capture of the image with a camera parameter, the image capturing device can also receive camera guide information of the image which is input to the image capturing device and send the camera guide information of the image to the server.

In the embodiment, the image capturing device can display an input prompting message when receives the image, to prompt the user to input camera guide information of the image. After receiving the camera guide information of the image which is input by the user, the image capturing device sends the camera guide information to the server.

It should be noted that, the image capturing device can display the input prompting message through a box, a popping-out window or other manners. However, in practical application, the image capturing device can also display the input prompting message through other manners, which is not specifically limited by the embodiments of the present invention.

It should be further noted that, the image capturing device can simultaneously send the image captured by the image capturing device, the environment condition for capturing the image and the camera guide information of the image to the server, or can also send the camera guide information of the image to the server separately. This is not specifically limited in the embodiment of the present invention.

In the embodiments of the present invention, the image capturing device can acquire an environment condition of a current environment and a device parameter of the image capturing device; send a sample acquiring request to a server; upon receipt of sample data sent by the server, determine a target camera parameter according to at least one sample image included in the sample data and set the target camera parameter as the current camera parameter. In this way, since the user does not need to manually set based on experience, it can improve the efficiency in setting a camera parameter. Moreover, since the sample data is sent by the server according to the environment condition of the current environment and the device parameter of the image capturing device, the target camera parameter determined by the sample data is consistent with the current environment in which the image capturing device is and the image capturing device can support the camera parameter. It can improve the efficiency of the image capturing device determining the current camera parameter and improve the photographic effect of an image captured with the image capturing device. In addition, the sample data includes at least one sample image, and the image capturing device can select a target sample image from the at least one sample image according to a received selection instruction, and determine the camera parameter of the target sample image as the target camera parameter. That is, a target sample image, and in turn, a target camera parameter can be accurately selected as desired. It can further improve the accuracy of determining the current camera parameter and improve the photographic effect of an image captured with the image capturing device. Further, the sample data also includes camera guide information of each of the at least one sample image. In this way, after the target sample image is selected and the current camera parameter is set, the process of capturing an image can be adjusted accurately according to the camera guide information of the target sample image. It can further improve the photographic effect of capturing an image for the image capturing device.

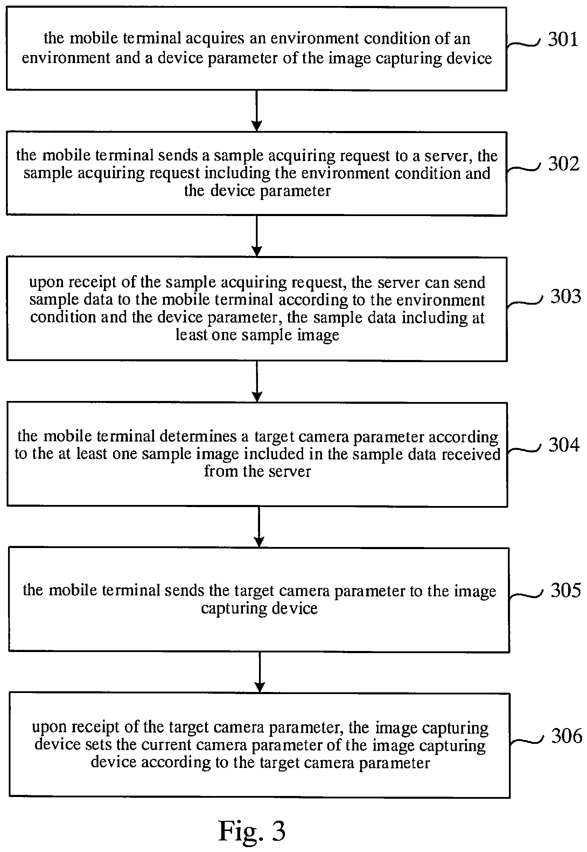

Fig. 3 is a flow chart illustrating a method for setting a camera parameter according to an exemplary embodiment. As shown in Fig. 3, the method for setting a camera parameter is implemented collectively by an image capturing device and a mobile terminal, and includes the following steps.

At step 301, the mobile terminal acquires an environment condition of a current environment and a device parameter of the image capturing device.

In the embodiment, the mobile terminal may be a terminal which is capable of establishing communication with the server such as a smart mobile phone, a tablet computer and a smart watch or the like. The image capturing device may be a device which is capable of capturing an image such as a smart camera.

It should be noted that, in order to improve the accuracy of acquiring the environment condition of the environment the mobile terminal is located in, the mobile terminal can be located in the same scene as the image capturing device. For example, the mobile terminal can be in the same Local Area Network (LAN) as the image capturing device. Alternatively, the mobile terminal can be within a preset range around the image capturing device. This is not specifically limited in the embodiment of the present invention.

It should be further noted that, the preset range can be a circular area with the image capturing device as the center of the circle and a radius of 50 meters. However, in practical application, the preset range can also be determined according to practical application. This is not specifically limited in the embodiment of the present invention.

Further, the device parameter of the image capturing device includes a camera parameter range the image capturing device can support or the device identification of the image capturing device.

In addition, the mobile terminal can acquire an environment condition of a current environment and a device parameter of the image capturing device in one of the two following possible ways.

In a first possible way, the mobile terminal can acquire an environment condition of a current environment and a device parameter of the image capturing device upon receipt of a camera-parameter acquiring request sent by the image capturing device.

In the embodiment, in order to reduce the times of communication between the mobile terminal and the image capturing device, and in turn, to improve the efficiency of setting a camera parameter, the device parameter of the image capturing device can be carried in the camera-parameter acquiring request.

In a second possible way, the mobile terminal can acquire an environment condition of a current environment and a device parameter of the image capturing device upon receipt of a camera-parameter acquiring instruction.

It should be noted that, the camera-parameter acquiring instruction can be triggered by a user performing a preset action such as a click, a touch or the like. However, in practical application, the preset action can be other action, which is not specifically limited in the embodiment of the present invention.

Further, in the second possible event, the operation of the mobile terminal acquiring a device parameter of the image capturing device can be: the mobile terminal sending a device-parameter acquiring request to the image capturing device, and the image capturing device sending the device parameter of the image capturing device to the mobile terminal upon receipt of the device-parameter acquiring request.

In the embodiment, the mobile terminal can establish connection with the image capturing device through Bluetooth, Wireless Fidelity (WIFI) or the like, and then send to the image capturing device the device-parameter acquiring request through the established connection. However, in practical application, the mobile terminal can also establish connection with the image capturing device by other manners and then send to the image capturing device the device-parameter acquiring request. This is not specifically limited in the embodiment of the present invention.

It should be noted that, in practical application, the mobile terminal can also acquire the device parameter of the image capturing device by other manners. For example, in one possible implementation, in case where the device parameter sent by the image capturing device includes a device identification, the mobile terminal can acquire the device identification by scanning a two-dimensional code or a bar code of the image capturing device. This is not specifically limited in the embodiment of the present invention.

At step 302, the mobile terminal sends a sample acquiring request to a server, the sample acquiring request including the environment condition and the device parameter.

It should be noted that, the operation of the mobile terminal sending a sample acquiring request can be similar to the operation of the image capturing device sending a sample acquiring request to the server at the above step 202, which will not be elaborated in the embodiment of the present invention.

At step 303, upon receipt of the sample acquiring request, the server can send sample data to the mobile terminal according to the environment condition and the device parameter, the sample data including at least one sample image.

It should be noted that, at step 303, the operation of the server sending sample data to the mobile terminal according to the environment condition and the device parameter can be similar to the operation of the server sending sample data to the image capturing device according to the environment condition and the device parameter at the above step 203, which will not be elaborated in the embodiment of the present invention.

Further, the sample data can also include camera guide information for each of the at least one sample image. The camera guide information is for guiding the user to capture an image based on the camera parameter of the sample image.

At step 304, upon receipt of the sample data sent by the server according to the environment condition and the device parameter, the mobile terminal determines a target camera parameter according to the at least one sample image included in the sample data.

It should be noted that, at step 304, the operation of the mobile terminal determining a target camera parameter according to the at least one sample image included in the sample data can be similar to the operation of the image capturing device determining a target camera parameter according to the at least one sample image included in the sample data at the above step 204, which will not be elaborated in the embodiment of the present invention.

Further, the mobile terminal can display the at least one sample image; upon receipt of a selection instruction, determine a sample image amongst the at least one sample image as the target sample image, the sample image corresponding to the selection instruction; acquire a camera parameter of the sample image; and determine the camera parameter of the sample image as the target camera parameter.

In addition, in case where sample data also includes camera guide information of each of the at least one sample image, the mobile terminal can also display the camera guide information of the target sample image.

In the embodiment, since the image capturing device generally has a limited storage space for storing captured images, the at least one sample image and the camera guide information of the target sample image can be displayed by the mobile terminal.

At step 305, the mobile terminal sends the target camera parameter to the image capturing device.

It can be seen from the above that, the mobile terminal can establish connection with the image capturing device through Bluetooth, Wireless Fidelity (WIFI) or the like. Therefore, the mobile terminal can send the target camera parameter to the image capturing device through the established connection.

Further, the mobile terminal can acquire the image captured by the image capturing device and the environment condition for capturing the image, the image including a camera parameter for capturing the image. Then, the mobile terminal can send the image and the environment condition for capturing the image to the server, for the server to store the image as a sample image corresponding to the environment condition and the camera parameter for capturing the image.

In the embodiment, the operation of the mobile terminal acquiring the image captured by the image capturing device and the environment condition for capturing the image can be: at a preset time period, the mobile terminal sending to the image capturing device an image acquiring request which carries time information, and upon receipt of the image acquiring request, the image capturing device sending to the mobile terminal images captured during a designated time period corresponding to the time information and environment conditions respectively for capturing the images.

It should be noted that, the time information is used for designating a time period. The time information can be determined before the mobile terminal sends the image acquiring request to the image capturing device. The designated time period can be any time period before the current time, for example, the designated time period can be June 6, 2016 to June 7, 2016. This is not specifically limited in the embodiment of the present invention.

Further, the mobile terminal can also receive camera guide information of the image which is input to the mobile terminal and send the camera guide information of the image to the server.

At step 306, upon receipt of the target camera parameter, the image capturing device sets the current camera parameter of the image capturing device according to the target camera parameter.

It should be noted that, at step 306, the operation of the image capturing device setting the current camera parameter of the image capturing device according to the target camera parameter can be similar to the operation of the image capturing device setting the current camera parameter of the image capturing device according to the target camera parameter discussed above which will not be elaborated in the embodiment of the present invention.

In the embodiments of the present invention, the mobile terminal can acquire an environment condition of a current environment and a device parameter of the image capturing device; send a sample acquiring request to a server; upon receipt of sample data sent by the server, determine a target camera parameter according to at least one sample image included in the sample data, send the target camera parameter to the image capturing device to instruct the image capturing device to set the target camera parameter as the current camera parameter. In this way, since the user does not need to manually set a camera parameter based on experience, it can improve the efficiency in setting a camera parameter. Moreover, since the sample data is sent by the server according to the environment condition of the current environment and the device parameter of the image capturing device, the target camera parameter determined by the sample data is consistent with the current environment of the image capturing device and the image capturing device can support the camera parameter. It can improve the efficiency of the image capturing device determining the current camera parameter and improve the photographic effect of an image captured by the image capturing device.

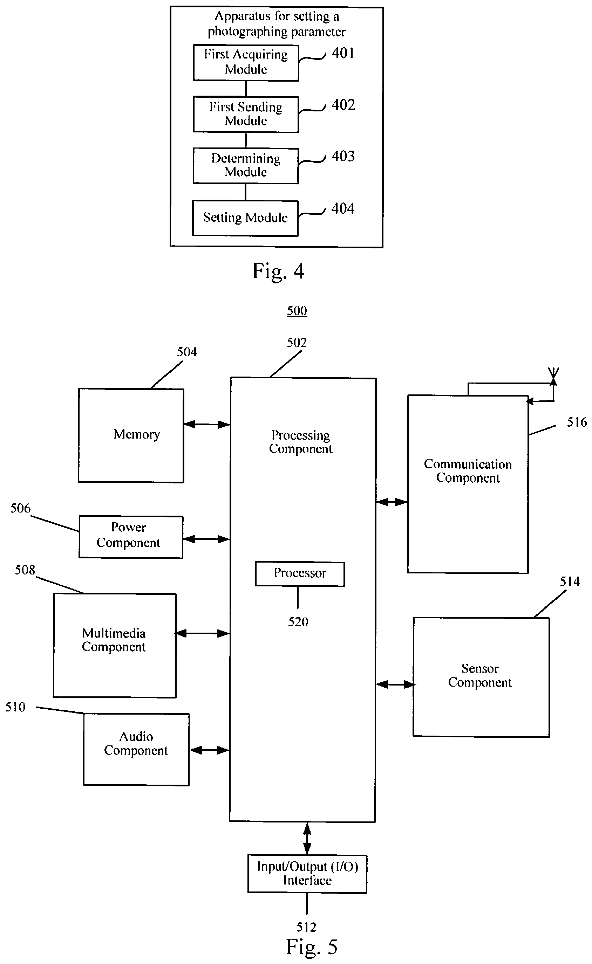

Fig. 4 is a block diagram illustrating an apparatus for setting a camera parameter according to an exemplary embodiment. As shown in Fig. 4, the apparatus includes a first acquiring module 401, a first sending module 402, a determining module 403 and a setting module 404.

The first acquiring module 401 is configured to acquire an environment condition of a current environment and a device parameter of an image capturing device;
the first sending module 402 is configured to send a sample acquiring request to a server, the sample acquiring request including the environment condition and the device parameter;
the determining module 403 is configured to determine a target camera parameter according to at least one sample image included in sample data received from the server in response to the sample acquiring request; and
the setting module 404 configured to set a current camera parameter of the image capturing device according to the target camera parameter.

In a particular embodiment, the device parameter of the image capturing device includes a camera parameter range the image capturing device can support or a device identification of the image capturing device.

In a particular embodiment, the determining module 404 includes:
a first displaying unit configured to display the at least one sample image;
a first determining unit configured to determine a sample image amongst the at least one sample image as a target sample image according to a received selection instruction;
an acquiring unit configured to acquire a camera parameter of the target sample image; and
a second determining unit configured to determine a camera parameter of the target sample image as the target camera parameter.

In a particular embodiment, the sample data further includes camera guide information of each of the at least one sample image, the camera guide information bring for guiding in capturing an image based on the camera parameter of the sample image.

In a particular embodiment, the determining module 404 further includes:
a second displaying unit configured to display the camera guide information of the target sample image.

In a particular embodiment, the apparatus further includes:
a second acquiring module configured to acquire an image captured by the image capturing device and an environment condition under which the image is captured, the image including a camera parameter used for capturing the image; and
a second sending module configured to send the image and the environment condition to the server, for the server to store the image as a sample image corresponding to the environment condition and the camera parameter used for capturing the image.

In a particular embodiment, the apparatus further includes:
a receiving module configured to receive inputted camera guide information of the image; and
a third sending module configured to send the camera guide information of the image to the server.

In the embodiments of the present invention, it is possible to acquire an environment condition of a current environment and a device parameter of the image capturing device; send a sample acquiring request to a server; upon receipt of sample data sent by the server, determine a target camera parameter according to at least one sample image included in the sample data and set the target camera parameter as the current camera parameter. In this way, since the user does not need to manually set the camera parameter based on experience, it can improve the efficiency in setting a camera parameter. Moreover, since the sample data is sent by the server according to the environment condition of the current environment and the device parameter of the image capturing device, the target camera parameter determined by the sample data is consistent with the current environment in which the image capturing device is and the image capturing device can support the camera parameter. It can improve the efficiency of the image capturing device determining the current camera parameter and improve the photographic effect of an image captured with the image capturing device.

With respect to the apparatuses in the above embodiments, the specific manners for performing operations for individual modules therein have been described in detail in the embodiments regarding the relevant methods, which will not be elaborated herein

Fig. 5 is a block diagram illustrating another apparatus 500 for setting a camera parameter according to an exemplary embodiment. For example, the apparatus 500 can be a mobile phone, a computer, a digital broadcast terminal, a messaging device, a tablet, a personal digital assistant, and the like.

Referring to Fig. 5, the apparatus 500 can include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the apparatus 500, such as the operations associated with display, telephone calls, data communications, camera operations, and recording operations. The processing component 502 can include one or more processors 520 to execute instructions to perform all or part of the steps in the above described methods. Moreover, the processing component 502 can include one or more modules which facilitate the interaction between the processing component 502 and other components. For instance, the processing component 502 can include a multimedia module to facilitate the interaction between the multimedia component 508 and the processing component 502.

The memory 504 is configured to store various types of data to support the operation of the apparatus 500. Examples of such data include instructions for any applications or methods operated on the apparatus 500, contact data, phonebook data, messages, pictures, video, etc. The memory 504 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the apparatus 500. The power component 506 can include a power management system, one or more power sources, and any other components associated with the generation, management, and distribution of power in the apparatus 500.

The multimedia component 508 includes a screen providing an output interface between the apparatus 500 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 508 includes a front camera and/or a rear camera. The front camera and the rear camera can receive an external multimedia datum while the apparatus 500 is in an operation mode, such as a photographing mode or a video mode. Each of the front camera and the rear camera can be a fixed optical lens system or have focus and optical zoom capability.

The audio component 510 is configured to output and/or input audio signals. For example, the audio component 510 includes a microphone ("MIC") configured to receive an external audio signal when the apparatus 500 is in an operation mode, such as a call mode, a recording mode, and a voice recognition mode. The received audio signal can be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons can include, but are not limited to, a home button, a volume button, a starting button, and a locking button.

The sensor component 514 includes one or more sensors to provide status assessments of various aspects of the apparatus 500. For instance, the sensor component 514 can detect an open/closed status of the apparatus 500, relative positioning of components, e.g., the display and the keypad, of the apparatus 500, a change in position of the apparatus 500 or a component of the apparatus 500, a presence or absence of user contact with the apparatus 500, an orientation or an acceleration/deceleration of the apparatus 500, and a change in temperature of the apparatus 500. The sensor component 514 can include a proximity sensor configured to detect the presence of nearby objects without any physical contact. The sensor component 514 can also include a light sensor, such as a CMOS or CCD image sensor, for use in imaging applications. In some embodiments, the sensor component 514 can also include an accelerometer sensor, a gyroscope sensor, a magnetic sensor, a pressure sensor, or a temperature sensor.

The communication component 516 is configured to facilitate communication, wired or wirelessly, between the apparatus 500 and other devices. The apparatus 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 500 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 504, executable by the processor 520 in the apparatus 500, for performing the above-described methods. For example, the non-transitory computer-readable storage medium can be a ROM, a RAM, a CD-ROM, a magnetic tape, a floppy disc, an optical data storage device, and the like.

A non-transitory computer readable storage medium, when instructions in the storage medium are executed by the processor of the mobile terminal, the mobile terminal is enabled to perform a method for setting a camera parameter. The method including:
acquiring an environment condition of a current environment and a device parameter of an image capturing device;
sending a sample acquiring request to a server, the sample acquiring request including the environment condition and the device parameter;
determining a target camera parameter according to at least one sample image included in sample data received from the server in response to the sample acquiring request; and
setting a current camera parameter of the image capturing device according to the target camera parameter.

In a particular embodiment, the device parameter of the image capturing device includes a camera parameter range the image capturing device can support or a device identification of the image capturing device.

In a particular embodiment, determining a target camera parameter according to at least one sample image included in the sample data, includes:
displaying the at least one sample image;
determining a sample image amongst the at least one sample image as a target sample image according to a received selection instruction;
acquiring a camera parameter of the target sample image; and determining a camera parameter of the target sample image as the target camera parameter.

In a particular embodiment, the sample data further includes camera guide information of each of the at least one sample image, the camera guide information being for guiding in capturing an image based on the camera parameter of the sample image.

In a particular embodiment, after the step of determining a sample image selected as a target sample image, the method further includes:
displaying the camera guide information of the target sample image.

In a particular embodiment, after the step of setting a current camera parameter of the image capturing device according to the target camera parameter, the method further includes:
acquiring an image captured by the image capturing device and an environment condition under which the image is captured, the image including a camera parameter used for capturing the image; and
sending the image and the environment condition to the server, for the server to store the image as a sample image corresponding to the environment condition and the camera parameter used for capturing the image.

In a particular embodiment, after the step of acquiring an image captured by the image capturing device and an environment condition under which the image is captured, the method further includes:
receiving inputted camera guide information of the image; and
sending the camera guide information of the image to the server.

In the embodiments of the present invention, it is possible to acquire an environment condition of a current environment and a device parameter of the image capturing device; send a sample acquiring request to a server; upon receipt of sample data sent by the server, determine a target camera parameter according to at least one sample image included in the sample data and set the target camera parameter as the current camera parameter. In this way, since the user does not need to manually set based on experience, it can improve the efficiency in setting a camera parameter. Moreover, since the sample data is sent by the server according to the environment condition of the current environment and the device parameter of the image capturing device, the target camera parameter determined by the sample data is consistent with the current environment in which the image capturing device is and the image capturing device can support the camera parameter. It can improve the efficiency of the image capturing device determining the current camera parameter and improve the photographic effect of an image captured with the image capturing device.

## Claims

1. A method implemented by a terminal for setting a camera parameter, **characterized in that** the method comprises:
acquiring (101) an environment condition of an environment and a device parameter of an image capturing device;
sending (102) a sample acquiring request to a server, the sample acquiring request including the environment condition and the device parameter;
determining (103) a target camera parameter according to at least one sample image included in sample data received from the server in response to the sample acquiring request; and
setting (104) the camera parameter of the image capturing device according to the target camera parameter.

2. The method of claim 1, wherein the device parameter of the image capturing device comprises a camera parameter range the image capturing device can support or a device identification of the image capturing device.

3. The method of claim 1 or 2, wherein determining (103) a target camera parameter according to at least one sample image included in the sample data, comprises:
displaying the at least one sample image;
determining a sample image amongst the at least one sample image as a target sample image according to a received selection instruction;
acquiring a camera parameter of the target sample image; and
determining a camera parameter of the target sample image as the target camera parameter.

4. The method of any of claims 1-3, wherein the sample data further comprises camera guide information of each of the at least one sample image, the camera guide information being for guiding in capturing an image based on the camera parameter of the sample image.

5. The method of claim 4, wherein after the step of determining a sample image as a target sample image, the method further comprises:
displaying the camera guide information of the target sample image.

6. The method of any of claims 1 to 5, wherein after the step of setting (104) a camera parameter of the image capturing device according to the target camera parameter, the method further comprises:
acquiring an image captured by the image capturing device and an environment condition under which the image is captured, the image including a camera parameter used for capturing the image; and
sending the image and the environment condition under which the image is captured to the server, for the server to store the image as a sample image corresponding to the environment condition and the camera parameter used for capturing the image.

7. The method of claim 6, wherein after the step of acquiring an image captured by the image capturing device and an environment condition under which the image is captured, the method further comprises:
receiving inputted camera guide information of the image; and
sending the camera guide information of the image to the server.

8. An apparatus for setting a camera parameter, **characterized in that** the apparatus comprises:
a first acquiring module (401) configured to acquire an environment condition of an environment and a device parameter of an image capturing device;
a first sending module (402) configured to send a sample acquiring request to a server, the sample acquiring request including the environment condition and the device parameter;
a determining module (403) configured to determine a target camera parameter according to at least one sample image included in sample data received from the server in response to the sample acquiring request; and
a setting module (404) configured to set the camera parameter of the image capturing device according to the target camera parameter.

9. The apparatus of claim 8, wherein the device parameter of the image capturing device comprises a camera parameter range the image capturing device can support or a device identification of the image capturing device.

10. The apparatus of claim 8 or 9, wherein the determining module (403) comprises:
a first displaying unit configured to display the at least one sample image;
a first determining unit configured to, determine a sample image amongst the at least one sample image as a target sample image according to a received selection instruction;
an acquiring unit configured to acquire a camera parameter of the target sample image; and
a second determining unit configured to determine a camera parameter of the target sample image as the target camera parameter.

11. The apparatus of any of claims 8-11, wherein the sample data further comprises camera guide information of each of the at least one sample image, the camera guide information being for guiding in capturing an image based on the camera parameter of the sample image.

12. The apparatus of claim 11, wherein the determining module (403) further comprises:
a second displaying unit configured to display the camera guide information of the target sample image.

13. The apparatus of any of claims 8 to 12, wherein the apparatus further comprises:
a second acquiring module configured to acquire an image captured by the image capturing device and an environment condition under which the image is captured, the image including a camera parameter used for capturing the image; and
a second sending module configured to send the image and the environment condition under which the image is captured to the server, for the server to store the image as a sample image corresponding to the environment condition and the camera parameter used for capturing the image.

14. The apparatus of claim 13, wherein the apparatus further comprises:
a receiving module configured to receive inputted camera guide information of the image; and
a third sending module configured to send the camera guide information of the image to the server.

15. An apparatus (500) for setting a camera parameter, **characterized in that** the apparatus comprises:
a processor (520); and
a memory (504) for storing instructions executable by the processor;
wherein the processor (520) is configured to perform:
acquiring an environment condition of an environment and a device parameter of an image capturing device;
sending a sample acquiring request to a server, the sample acquiring request including the environment condition and the device parameter;
determining a target camera parameter according to at least one sample image included in sample data received from the server in response to the sample acquiring request; and
setting the camera parameter of the image capturing device according to the target camera parameter.
